# EUROPÄISCHE PATENTSCHRIFT

(11) **EP 4 194 351 B1**
(45) Veröffentlichungstag und Bekanntmachung des Hinweises auf die Patenterteilung: **19.06.2024**
(21) Anmeldenummer: 21212928.2
(22) Anmeldetag: 07.12.2021
(51) Int. Cl.: B65D 1/24, B29C 45/14

(54) **VERFAHREN ZUR HERSTELLUNG EINES TRANSPORTBEHÄLTERS, SPRITZGUSSWERKZEUG DAFÜR SOWIE TRANSPORTBEHÄLTER MIT INMOULD-FOLIE**
METHOD OF MANUFACTURING A TRANSPORT CONTAINER, INJECTION MOULD FOR SUCH A CONTAINER AND TRANSPORT CONTAINER WITH INMOULD FOIL
PROCÉDÉ DE FABRICATION D'UN RÉCIPIENT DE TRANSPORT, OUTILS DE MOULAGE PAR INJECTION ASSOCIÉ, AINSI QUE RÉCIPIENT DE TRANSPORT POURVU DE FEUILLE INMOULD

(43) Veröffentlichungstag der Anmeldung: 14.06.2023
(73) Patentinhaber: Oberland M & V GmbH, 88410 Bad Wurzach (DE)
(72) Erfinder: GÖTZ, Kira, 88212 Ravensburg (DE); GÖTZ, Lisa, 88214 Ravensburg (DE)
(74) Vertreter: Simmons & Simmons LLP (Munich)

(56) Entgegenhaltungen:
- EP-A1- 1 008 527
- WO-A1-2018/213914
- CH-A1- 703 121
- DE-A1- 19 844 183

## Beschreibung

### Technisches Gebiet

Die Erfindung betrifft ein Verfahren zur Herstellung eines Transportbehälters, insbesondere eines Getränkeflaschenkastens, umfassend das Bereitstellen eines Spritzgusswerkzeugs, das Einlegen mindestens einer Inmould-Folie in das Spritzgusswerkzeug, so dass die mindestens eine Inmould-Folie an einer Wandung des geöffneten Spritzgusswerkzeugs anliegt, das Schließen des Spritzgusswerkzeugs, das Einspritzen eines geschmolzenen Kunststoffmaterials in das Spritzgusswerkzeug, das Öffnen des Spritzgusswerkzeugs und Entnehmen des Transportbehälters nach formstabiler Abkühlung des Kunststoffmaterials. Des Weiteren betrifft die Erfindung Spritzgusswerkzeug und einen spritzgegossenen Transportbehälter aus einem Kunststoffmaterial, insbesondere einen spritzgegossenen Getränkeflaschenkasten, umfassend einen Boden und Seitenwände, wobei in mindestens zweien der Seitenwände Öffnungen angeordnet und Griffbereiche ausgebildet sind und wobei zumindest ein Teil mindestens einer der Seitenwände auf einer Außenseite mit mindestens einer Inmould-Folie versehen ist.

### Stand der Technik

Im Stand der Technik sind verschiedene Transportbehälter zur Aufnahme von Flaschen bekannt, herkömmlich auch als Getränkeflaschenkasten, oder vereinfacht als Flaschenkasten, bezeichnet. Zur Kennzeichnung des Inhalts und für eine ästhetisch ansprechende Gestaltung ist es üblich, derartige Transportbehälter mit Kennzeichen zu versehen. Dabei ist es wünschenswert, insbesondere auch die Farbe und die Oberflächenanmutung des Transportbehälters gestalten zu können.

Aus EP 1 532 053 B1 ist ein Flaschenkasten und ein entsprechendes Verfahren zur Herstellung bekannt, bei dem ein zweiter Kunststoff an ein erstes Teil aus einem ersten Kunststoff angespritzt wird. Dabei ist das erste Kunststoffteil derart geformt, dass dieses einen Bereich zur Aufnahme des zweiten Kunststoffs ausbildet, welcher durch eine Dichtleiste begrenzt ist, die von einer Wand des ersten Kunststoffteils nach außen hervorsteht und bei dem Gussvorgang mit dem Spritzgusswerkzeug entsprechend abdichtet. Die Dichtleiste dient hier insbesondere auch dazu, dass ein einzulegendes und anzuspritzendes Inmouldlabel beim Einlegen in die Spritzgussform sowie beim Spritzvorgang selbst an der angedachten Position verbleibt. Nachteilig hieran ist neben dem großen Aufwand für die Durchführung eines zweiten Spritzgussvorgangs auch eine mangelnde Recyclingfähigkeit des erhaltenen Flaschenkastens. Die beiden verschiedenen Kunststoffe, die in erheblichen Mengen vorliegen, sowie das eingelegte Inmouldlabel sind letztendlich fest miteinander verbunden und lassen sich daher nicht sortenrein wiederverwerten.

Im Stand der Technik ist für das Aufbringen von Beschriftungen und Dekorationen bekannt, vorbedruckte Kunststofffolien in das Spritzgusswerkzeug einzulegen. Diese Technik wird als "Inmould-Labelling-Technik" bezeichnet, mit der Inmould-Folien als eingespritzte Inmouldlabel zum Einsatz kommen.

Aus DE 196 13 494 A1 ist bekannt, ein Etikett in Form eines bedruckten folienartigen Trägers, im Folgenden auch als Inmould-Folie bezeichnet, vor dem Einspritzen der Kunststoffschmelze an der vorgesehenen Stelle im Spritzgusswerkzeug an eine ebene Werkzeugwandung anzuordnen und zu halten. Die Fixierung erfolgt durch Vakuum in sogenannten Vakuumkanäle, die ausschließlich in der ebenen Werkzeugwandung angeordnet sind und durch die der folienartige Träger umlaufend an der Werkzeugwandung der Form gehalten wird.

Im Stand der Technik sind auch andere unterstützende Methoden bekannt, um eine Folie an einer ebenen Werkzeugwandung zu halten. Beispielsweise kann die Folie zusätzlich mit statischer Ladung zwischen Inmouldlabel und Werkzeug fixiert werden.

EP 1 008 527 A1 und DE 198 44 183 A1 zeigen einen Transportbehälter für Flaschen mit einem Etikett, das auf der nach außen gewölbten Außenseitenwand angeordnet ist. Bei der EP 1 008 527 A1 liegt die Kante des Etiketts flach auf dem nicht gewölbten Teil der Seitenwand. Beide Dokumente offenbaren das Fixieren des Etiketts an der Werkzeugwand mittels Unterdruck. In der CH 703 121 A1 und WO 2018/213914 A1 liegt die Kante eines flachen RFID-Einlegers hinter einer Erhebung der Werkzeugwand, welche das Abheben des Einlegers durch die Schmelzeströmung verhindert.

Nachteilig an den bekannten Verfahren zum Einbringen einer Inmould-Folie ist, dass der folienartige Träger der Inmould-Folie nur derart eingebracht werden kann, dass keine Schnittkante der Inmould-Folie in einem gekrümmten Bereich mit einer in Richtung des Innenbereichs des Transportbehälters weisenden Krümmung liegt. Werden Kanten der Inmould-Folie an unebenen Stellen angeordnet, lösen sich beim Spritzgießen üblicherweise die Kanten der Inmould-Folie von der Wandung des Spritzgusswerkzeugs. Des Weiteren tritt beim Spritzguss insbesondere im oberen Bereich des Transportbehälters, insbesondere in dessen Griffbereichen, das Problem auf, dass das flüssige Kunststoffmaterial üblicherweise im Bereich des Kastenbodens in das Spritzgusswerkzeug eingespritzt wird und bereits deutlich abgekühlt ist, bis es den Griffbereich erreicht. Dadurch wird eine anhaltende Verbindung zwischen dem eingespritzten Kunststoffmaterial und der Inmould-Folie im oberen Bereich des Transportbehälters derart erschwert, dass die Inmould-Folie in diesem Bereich nach dem Abschluss des Spritzgussvorgangs nicht randumschließend mit dem Kunststoffmaterial verbunden ist. Somit können unter Verwendung der bekannten Verfahren Inmould-Folien in derartigen geometrisch ungünstigen und verfahrensablaufbezogen erst spät verarbeiteten Bereichen nicht zum Einsatz kommen, oder zumindest nur unter beträchtlichen Qualitätsverlusten. Insbesondere die üblicherweise in einem oberen Bereich liegenden Griffbereiche eines Getränkekastens weisen starke Krümmungen und scharfe Kanten auf, so dass mit den bekannten Verfahren keine Inmould-Folie bis an die Ränder der Griffbereiche herangeführt oder um "problematische" Kanten herum angeordnet werden können.

Es ist eine Aufgabe der Erfindung ein Verfahren bereitzustellen, um ein mit dem Spritzgusskörper nahtlos verbundenes Inmouldlabel an äußeren Designflächen und an nach innen weisenden Ecken an der Kastenober- bzw. -unterseite sowie an den Öffnungen in den Designflächen, wie zum Beispiel den Griffbereichen eines Transportbehälters wie zum Beispiel eines Getränkeflaschenkastens, zu erzeugen.

Des Weiteren ist es eine Aufgabe der Erfindung, einen entsprechenden Transportbehälter sowie ein dazugehöriges Spritzgusswerkzeug bereitzustellen.

### Zusammenfassung der Erfindung

Die Aufgaben der vorliegenden Erfindung werden durch ein Verfahren zur Herstellung eines Transportbehälters, durch ein entsprechendes Spritzgusswerkzeug sowie durch einen spritzgegossenen Transportbehälter mit den Merkmalen der unabhängigen Ansprüche gelöst. Vorteilhafte Weiterbildungen der Erfindung sind in den jeweiligen dazugehörigen Unteransprüchen angegeben.

Gemäß einem ersten Gesichtspunkt der vorliegenden Erfindung wird ein Verfahren zur Herstellung eines Transportbehälters, insbesondere eines Flaschenkastens, bereitgestellt, dass die nachfolgenden Schritte, vorzugsweise in dieser Reihenfolge, umfasst:
- Bereitstellen eines Spritzgusswerkzeugs;
- optionale Vortemperierung mindestens einer einzulegenden Inmould-Folie;
- Einlegen der mindestens einen Inmould-Folie in das Spritzgusswerkzeug, so dass die mindestens eine Inmould-Folie an einer Wandung des geöffneten Spritzgusswerkzeugs anliegt, wobei die Zuführung der Inmould-Folie in das Spritzgusswerkzeug manuell oder durch eine Zuführvorrichtung erfolgen kann;
- Schließen des Spritzgusswerkzeugs,
- Einspritzen eines geschmolzenen Kunststoffmaterials in das Spritzgusswerkzeug; und
- Öffnen des Spritzgusswerkzeugs und Entnehmen des Transportbehälters nach formstabiler Abkühlung des Kunststoffmaterials.

Bei dem erfindungsgemäßen Verfahren ist das Spritzgusswerkzeug derart ausgestaltet, dass dieses angrenzend an Bereiche des Spritzgusswerkzeugs, welche eine Krümmung aufweisen, jeweils eine Erhebung aufweist, wobei die Krümmung in Richtung der Innenseite des zu bildenden Transportbehälters weist und in der sich eine Kante der mindestens einen Inmould-Folie befindet. Diese gekrümmten Bereiche des Transportbehälters, welche eine Krümmung in Richtung des Inneren des Transportbehälters aufweisen, befinden sich insbesondere in der Nähe von Kanten und Griffen des Transportbehälters.

Die Erhebung ist dabei eingerichtet bzw. ausgebildet, um einen Materialfluss des für das Spritzgießen verwendeten geschmolzenen Kunststoffmaterials in dem geschlossenen Spritzgusswerkzeug so umzulenken, dass das geschmolzene Kunststoffmaterial so auf einen an die Kante der mindestens einen Inmould-Folie angrenzenden Randbereich der mindestens einen Inmould-Folie trifft, dass das geschmolzene Kunststoffmaterial den Randbereich der mindestens einen Inmould-Folie gegen die Wandung des Spritzgusswerkzeugs drückt. Der Randbereich der Inmould-Folie ist insbesondere ein Teil der Inmould-Folie, welcher sich zwischen der Kante der Inmould-Folie und einem Haltemittel des Spritzgusswerkzeugs, wie zum Beispiel einer Vakuum-Nut, befindet.

Die Erhebung ist in dem Spritzgusswerkzeug bevorzugt vorrangig quer zur Flussrichtung der Materialschmelze angeordnet, um eine Änderung der Richtung des Kunststoffmaterials zur Bildung des Korpus des Transportbehälters herbeizuführen. Das Kunststoffmaterial wird somit nicht gegen eine Kante, wie zum Beispiel einen Schnittrand der Inmould-Folie, gedrückt, sondern um die Kante herum an die Rückseite der Inmould-Folie geleitet, so dass die Inmould-Folie durch das geschmolzene Kunststoffmaterial gegen die Werkzeugaußenseiten gedrückt wird. Die durch die erzeugte Umlenkung herbeigeführte Richtungsänderung führt dazu, dass ein Winkel zwischen Materialflussrichtung und Randbereich der mindestens einen Inmould-Folie größer als 5° beträgt, so zum Beispiel größer als 10°, größer als 30°, oder sogar größer als 45°. Entsprechend trifft das Spritzgussmaterial nicht parallel zur Wandung des Werkzeugs auf den Randbereich an der Kante der Inmould-Folie. Diese besondere Materialflusslenkung führt zum einen dazu, dass die Inmould-Folie nicht verschoben wird, was insbesondere in den kritischen Eckbereichen von großem Vorteil ist. Zum anderen wird eine Verwirbelung im Bereich der Kante der Inmould-Folie zwischen einer Haltevorrichtung zum Halten der Inmould-Folie und der Erhebung erzielt. Diese Verwirbelung bewirkt eine stärkere Verbindung zwischen dem Material der Inmould-Folie und dem Kunststoffmaterial.

Die Inmould-Folie kann bei dem optionalen Schritt des Vortemperierens der mindestens einen Inmould-Folie vor deren Einlegen in das Spritzgusswerkezug angesichts einer üblicher Lagerungstemperatur von Inmould-Folien unter Raumtemperatur bei Raumtemperatur von 20-25°C vortemperiert werden. Falls hier jedoch eine weiterführende Temperierung notwendig ist, kann diese weiterführende Temperierung der Inmould-Folie mit Temperaturen von maximal 50-120°C ausgeführt werden. Dabei ist dieses "Vor-Temperieren" so zu verstehen, dass die Inmould-Folie außerhalb des Spritzgusswerkzeugs erhitzt wird, und dann, solange die Inmould-Folie noch warm ist, mit/ohne Vorkrümmung in die durch das Spritzgusswerkzeug gegebene Form eingelegt wird. Die Inmould-Folie behält dann nach einem Erkalten in dem Spritzgusswerkzeug die dadurch entstehende Form bei. Dieser optionale vorgeschaltete Schritt des Temperierens der Inmould-Folie ist also als ein in den Spritzgussvorgang integrierten Formgebungsschritt für die Inmould-Folie zu verstehen.

Gemäß einer bevorzugten Ausführung des erfindungsgemäßen Verfahrens wird der geschmolzene Kunststoff mit einer vorbestimmten Temperatur in das Spritzgusswerkzeug eingespritzt, wobei die vorbestimmte Temperatur so gewählt ist, dass das geschmolzene Kunststoffmaterial bei Erreichen der mindestens einen Inmould-Folie noch eine Temperatur oberhalb der Schmelztemperatur der Inmould-Folie aufweist, und insbesondere so, dass die Temperatur geringer als eine Zersetzungstemperatur des Kunststoffmaterials ist.

Gemäß einer weiteren bevorzugten Ausführung des erfindungsgemäßen Verfahrens weist die Erhebung eine Höhe im Bereich von 0,01 mm bis 3 mm auf, so zum Beispiel in einem Bereich von 0,1 mm bis 2 mm. Beispielsweise weist die Erhebung eine Höhe von 1 mm auf. Die Höhe der Erhebung ist dabei so zu wählen, dass sie größer als eine Dicke der Inmould-Folie gewählt ist.

Alternativ oder zusätzlich dazu weist die Erhebung eine längliche Form auf, und erzeugt entsprechend keine punktförmige Vertiefung, sondern eine längliche Vertiefung. Alternativ oder zusätzlich dazu kann die Erhebung parallel zu der Kante der Inmould-Folie verlaufen. Ferner kann die Erhebung einen Querschnitt in Form eines Rechtecks aufweisen, wobei die Kanten der Rechteckform abgerundet oder scharf ausgebildet sein können. Alternativ dazu kann die Erhebung einen Querschnitt in Form eines Halbkreises oder eines Ausschnitts eines Ovals aufweisen. Eine Breite der Erhebung liegt dabei in einem Bereich von 0,1 mm bis 3 mm. Gemäß einer weiteren bevorzugten Ausführung des erfindungsgemäßen Verfahrens liegt ein Abstand zwischen der Erhebung und der Kante der mindestens einen Inmould-Folie im Bereich von 0 bis 5 mm, so zum Beispiel in einem Bereich von 1 mm bis 3 mm.

Gemäß einer weiteren bevorzugten Ausführung des erfindungsgemäßen Verfahrens ist das Spritzgusswerkzeug eingerichtet, um die mindestens eine Inmould-Folie mittels Unterdruck zu fixieren, wobei hierzu das Spritzgusswerkzeug mit mindestens einem Haltemittel in Form einer Vakuum-Öffnung und/oder mindestens einer Vakuum-Nut versehen ist. Hier kann die mindestens eine Vakuum-Nut, die beispielsweise in Form einer runden oder eckigen bzw. nichtrunden Nut mit Verbindung zu einer Vakuumerzeugungseinrichtung vorliegen kann, mit einen Abstand von der Erhebung zum Umlenken des Materialflusses im Bereich von 1 mm bis 5 mm aufweisen und parallel zu der mindestens einen Erhebung verlaufen.

Gemäß einer weiteren bevorzugten Ausführung des erfindungsgemäßen Verfahrens kann die Wandung des geöffneten Spritzgusswerkzeugs, an der die mindestens eine Inmould-Folie anliegen, eine in das Innere gerichtete Wandung des Spritzgusswerkzeugs sein.

Gemäß einer weiteren bevorzugten Ausführung des erfindungsgemäßen Verfahrens ist die mindestens eine Inmould-Folie eine bedruckte Kunststofffolie. Ferner kann die Kunststofffolie eine Dicke im Bereich von 50 µm bis 250 µm aufweisen, so zum Beispiel in einem Bereich von 100 µm bis 200 µm, insbesondere eine Dicke von 150 µm.

Gemäß einer weiteren bevorzugten Ausführung des erfindungsgemäßen Verfahrens ist das geschmolzene Kunststoffmaterial aus der Gruppe bestehend aus Polyethylen hoher Dichte (HDPE) und Polypropylen (PP) ausgewählt, oder das geschmolzene Kunststoffmaterial besteht aus einer Kombination aus diesen. Ferner kann das Material der Inmould-Folie aus der Gruppe bestehend aus PE-Folie (Polyethylenfolie), PP-Folie (Polypropylenfolie) oder PET-Folie (Polyethylentherephthalatfolie ausgewählt sein, oder das Material der Inmould-Folie kann aus einer Kombination aus diesen bestehen. Dabei kann die PE-Folie (Polyethylenfolie), PP-Folie (Polypropylenfolie) oder PET-Folie (Polyethylentherephthalatfolie) als eine Grundfolie zum Einsatz kommen, welche einseitig oder beidseitig bedruckt sein kann, um eine Farbe und/oder Information in gewünschter Darstellung zu erhalten. Die Bedruckung der Inmould-Folie kann beispielsweise mit Offsetdruck, Flexodruck, Tiefdruck, Digitaldruck oder mit Siebdruck, oder mit einer beliebigen Kombination aus diesen, erfolgen. Bei einem Offsetdruckverfahren kann vorgesehen sein, nur den Bereich mit einem Grundweiß-Farbdruck zu versehen, an dem sich gedruckte Information, z.B. Buchstaben oder Logos befindet. Bevorzugt kann hier eine Inmould-Folie zum Einsatz kommen, bei der die Grundfolie auf der dem Kastengrundkörper zugewandten Seite eine erste Bedruckung aufweist und auf der dem Kastengrundkörper abgewandten Seite eine zweite Bedruckung aufweist. Die PE-, PP-oder PET-Grundfolie kann damit einer Kaschierung oder mit einer Schutzlackschicht versehen sein. Auch laminierte Inmould-Folien, bei welchen die Grundfolie in eine Art Hülle aufgenommen ist, sind denkbar. Derartige Kaschierungen und auch Schutzlacke helfen, die Druckschichten der Grund-Folie gegen Beschädigungen, beispielsweise durch vorbeikratzende Bestandteile einer Transportvorrichtung, durch Stapelung und Palettierung mit anderen Kästen oder im alltäglichen Gebrauch zu schützen. Unter einer kaschierten Folie wird eine Folie verstanden, bei welcher die Grundfolie mit einer Kunststoff-Schutzschicht überzogen ist die ggf. noch eine haftvermittelnde Unterseite aufweisen kann. Insbesondere kann die Kaschierung durch eine PET-Klarsichtfolie realisiert sein. Die Kaschierung kann alternativ auch durch eine PP-Folie erfolgen. Insbesondere kann eine transparente Folie vorgesehen sein. Bei Ausführungsformen, in denen ausschließlich aus PE oder PP hergestellte Inmould-Folien eingesetzt werden, ist darüber hinaus vorteilhaft ein Recycling des Transportbehälters ohne sogenanntes Downcycling möglich. In einigen Ausführungsformen kann die Kaschierung der Inmould-Folie außerdem mit Wärme- und Lichtstabilisatoren (HALS-Stabilisatoren) ausgerüstet sein. Die Kaschierung oder die Schutzlackschicht können ebenfalls bedruckt sein. Im Fall der Verwendung von HDPE als Kunststoffmaterial für das geschmolzene Kunststoffmaterial und einem Verbundstoff basierend auf PE als Inmould-Folie liegt die Temperatur des geschmolzenen Kunststoffmaterials beim Einspritzen in das Spritzgusswerkzeug in einem Bereich von 220°C bis 300°C, so zum Beispiel in einem Bereich von 230°C bis 280°C auf.

Gemäß einem weiteren Gesichtspunkt der vorliegenden Erfindung wird ein Spritzgusswerkzeug zur Verwendung in einem Verfahren wie vorhergehend beschrieben bereitgestellt, wobei das Spritzgusswerkzeug mindestens eine Vakuum-Nut aufweist, welche von einer Erhebung zum Umlenken eines Materialflusses einen Abstand im Bereich von 1 mm bis 7 mm aufweist.

Gemäß einem weiteren Gesichtspunkt der vorliegenden Erfindung wird ferner ein spritzgegossener Transportbehälter aus einem Kunststoffmaterial bereitgestellt, insbesondere ein spritzgegossener Flaschenkasten, mit einem Boden und Seitenwänden, wobei in mindestens zweien der Seitenwände Öffnungen angeordnet und Griffe ausgebildet sind. Ferner ist zumindest ein Teil mindestens einer der Seitenwände auf einer Außenseite mit mindestens einer Inmould-Folie versehen ist, und die Seitenwand, die an eine Kante der mindestens einen Inmould-Folie angrenzt, weist eine Nute auf. Dabei erstreckt sich die Kante der mindestens einen Inmould-Folie in einen gekrümmten Teil der Seitenwand hinein, welcher eine Krümmung in Richtung der Innenseite des Transportbehälters aufweist. Der Transportbehälter weist bevorzugt einen Boden und vier Seitenwände auf, wobei sich bevorzugt in zumindest zweien der Seitenwände Öffnungen befinden und Griffbereiche ausgebildet sind.

Gemäß einer bevorzugten Ausführung des erfindungsgemäßen Transportbehälters ist dieser derart ausgestaltet, dass eine Vielzahl an Transportbehälter übereinander stapelbar sind, wobei die mindestens eine Inmould-Folie derart in dem Transportbehälter angeordnet, dass eine oder mehrere Inmould-Folien so an eine obere Kante und eine untere Kante der Seitenwand des Transportbehälter angrenzen, dass bei einem Stapeln der Transportbehälter übereinander ein optisch nahtloser Übergang zwischen den Inmould-Folien der übereinander gestapelten Transportbehältern vorliegt. Entsprechend wird es durch das erfindungsgemäße Verfahren möglich, Inmould-Folien so nahe an einen üblicherweise problematischen Bereich eines Getränkeflaschenkastens heranzuführen und dort zu fixieren, dass ein direkter Übergang eines Teils eines entsprechend positionierten Logos bei einer gestapelten Kastenanordnung in einen entsprechenden ergänzenden Teil der jeweiligen Inmould-Folie eines benachbarten gestapelten Kastens stattfindet, so dass der Eindruck eines vollständigen Logos entsteht, aufgebaut aus zwei Logo-Teilbereichen.

Das Spritzgusswerkzeug kann dazu einteilig oder mehrteilig mit mehreren Werkzeugbacken ausgestaltet sein und sowohl flächige als auch eckige Bereiche umfassen. Es kann sowohl eine Seitenwand des späteren Transportbehälters definieren, aber auch einen Eckbereich des Transportbehälters oder mehrere, z. B. auch umlaufende Seitenwände.

Vereinfacht gesagt liegt die vorliegende Erfindung also im Bereitstellen eines Verfahrens zur Herstellung eines Transportbehälters, insbesondere eines Flaschenkastens, mit dem Schritten des Bereitstellens eines Spritzgusswerkzeugs, Einlegen mindestens einer Inmould-Folie in das Spritzgusswerkzeug, so dass die mindestens eine Inmould-Folie an einer Wandung des geöffneten Spritzgusswerkzeugs anliegt, Schließen des Spritzgusswerkzeugs, Einspritzen eines geschmolzenen Kunststoffmaterials in das Spritzgusswerkzeug, und Öffnen des Spritzgusswerkzeugs und Entnehmen des Transportbehälters nach formstabiler Abkühlung bzw. "Aushärten" des Kunststoffmaterials, wobei das Spritzgusswerkzeug eine Erhebung aufweist, um einen Materialfluss des geschmolzenen Kunststoffmaterials in dem geschlossenen Spritzgusswerkzeug so umzulenken, dass das geschmolzene Kunststoffmaterial den Randbereich der mindestens einen Inmould-Folie gegen die Wandung des Spritzgusswerkzeugs drückt. Ferner betrifft die vorliegende Erfindung ein Spritzgusswerkzeug zur Verwendung in einem derartigen Verfahren, sowie den daraus spritzgegossenen Transportbehälter.

Merkmale, die zuvor zu einer Ausführungsform des erfindungsgemäßen Verfahrens beschrieben wurden können sinngemäß auch zur Definition der erfindungsgemäßen Spritzgusswerkzeugs und zur Definition des erfindungsgemäßen Transportbehälters verwendet werden und sind hiermit ausdrücklich auch als Vorrichtungsmerkmale offenbart. Gleiches gilt in die andere Richtung: Merkmale die nur zur Definition der erfindungsgemäßen Spritzgusswerkzeugs und zur Definition des erfindungsgemäßen Transportbehälters offenbart sind können auch zur Definition des erfindungsgemäßen Verfahrens verwendet werden.

Wie hier und auch in den beigefügten Ansprüchen eventuell verwendet, können die Singularformen "ein"/"eine"/"einer" und "der"/"die"/"das" auch deren Plural umfassen, sofern der Kontext nicht eindeutig etwas anderes vorgibt. In ähnlicher Weise sind die Wörter "umfassen", "enthalten" und "aufweisen" sowohl als "ausschließlich" als auch "nicht ausschließlich" zu verstehen, also im Sinne von "einschließlich, aber nicht beschränkt auf...". Die Begriffe "mehrere", "Vielfaches" oder "Vielzahl" beziehen sich üblicherweise auf zwei oder mehr, d.h. 2 oder >2, einschließlich weiterer ganzzahliger Vielfacher von 1, wobei sich die Begriffe "einzeln" oder "allein" auf eins (1) beziehen, also "=1". Ferner ist der Ausdruck "mindestens eins" oder "wenigstens eins" als eins oder mehrere, d.h. 1 oder >1, ebenfalls mit ganzzahligen Vielfachen, zu verstehen. Außerdem sollen sich die Wörter "hierin", "oben", "vorher" und "unten" oder "nachfolgend" und Wörter mit ähnlicher Bedeutung, wenn sie in dieser Beschreibung verwendet werden, auf diese Beschreibung insgesamt und nicht auf bestimmte Teile der Beschreibung beziehen.

Die Beschreibung spezifischer Ausführungsformen in dieser Schrift soll nicht als erschöpfend angesehen werden, oder die hierin gegebene Offenbarung soll nicht auf die genaue offenbarte Form beschränkt werden. Während hierin beschriebene spezifische Ausführungsformen und Beispiele für die Offenbarung zur Veranschaulichung dienen, sind verschiedene äquivalente Modifikationen innerhalb des Schutzumfangs der Offenbarung möglich, wie es von einem Fachmann auf dem vorliegenden technischen Gebiet erkennbar ist. Spezielle technische Elemente von beschriebenen Ausführungsformen können für technische Elemente in anderen Ausführungsformen kombiniert oder durch diese ersetzt werden. In den Zeichnungen bezeichnen gleiche Bezugszeichen gleiche Elemente, um Wiederholungen zu vermeiden, und Teile, die der Fachmann ohne spezielles Wissen umsetzen kann, können aus Gründen der Übersichtlichkeit weggelassen werden.

### Vorteile der Erfindung

Neben den vorhergehend bereits genannten Vorteilen der vorliegenden Erfindung kann weiterhin als wichtige Vorteile genannt werden, dass gerade im Bereich der Ränder der Inmould-Folien in den oberen und unteren Transportbehälterbereichen die Haftung am Spritzgusskorpus üblicherweise am geringsten ist. Durch die entsprechend erzeugte verbesserte Haftung von Inmould-Folie und Kastenkorpus in dem Bereich zwischen Vakuumkante und Nutrand, in welchem die Ränder der Inmould-Folie enden, wird eine höhere Widerstandsfähigkeit der Transportbehälter mit Inmould-Folie beispielsweise gegenüber Waschlaugen in Mehrwegkasten-Waschanlagen erreicht.

Ferner wird durch die generelle Verwendung von Inmould-Folien angesichts der geringen Menge eines anderen Kunststoffs durch die Inmould-Folie die Recyclingfähigkeit des Transportbehälters nicht beeinträchtigt.

Während Vorteile, die bestimmten Ausführungsformen der Offenbarung zugeordnet sind, im Zusammenhang mit diesen Ausführungsformen beschrieben werden, können andere Ausführungsformen ebenfalls diese Vorteile aufweisen. Weitere Aspekte und Vorteile der vorliegenden Erfindung ergeben sich aus der Beschreibung der bevorzugten, in den Figuren dargestellten Ausführungsform.

### Kurze Beschreibung der Figuren

Es zeigen:
- Figur 1: eine schematische perspektivische Ansicht einer bevorzugten Ausführungsform eines erfindungsgemäßen Transportbehälters;
- Figur 2: eine schematische Seitenansicht des in Figur 1 dargestellten Transportbehälters;
- Figur 3: eine schematische Detailansicht eines Griffbereichs des in Figuren 1 und 2 dargestellten Transportbehälters;
- Figur 4: ein Bewegungsdiagramm eines Spritzgussvorgangs, insbesondere für den in Figur 3 dargestellten Griffbereich, und
- Figur 5: eine schematische Seitenansicht von gestapelten Transportbehältern gemäß der bevorzugten Ausführungsform mit optisch nahtlosem Übergang der Logos ineinander.

### Bezugszeichenliste

- 10: Transportbehälter
- 12: Seitenwand / Designwand
- 14: Boden
- 16: Öffnung / Grifföffnung
- 18: Griff
- 20: Nute / Vertiefungen im Transportbehälter 10 in Form eines Rechtecks, eines Halbkreises oder eines Ausschnitts eines Ovals
- 22: Obere Kante
- 24: untere Kante

- 30: Inmould-Folie
- 302: Rand der Inmould-Folie

- 100: Spritzgusswerkzeug
- 102: Außenwand der Form
- 104: Innenwand der Form
- 106: Erhebung
- 108: Vakuum-Nut
- 110: Materialfluss

### Bevorzugte Ausführungsform der Erfindung

Die Beschreibung spezifischer Ausführungsformen in dieser Schrift soll nicht als erschöpfend angesehen werden, oder die hierin gegebene Offenbarung soll nicht auf die genaue offenbarte bevorzugte Ausführungsform beschränkt werden.

Während hierin beschriebene spezifische Ausführungen und Beispiele für die Offenbarung zur Veranschaulichung dienen, sind verschiedene äquivalente Modifikationen innerhalb des Schutzumfangs der Offenbarung möglich, wie es von einem Fachmann auf dem vorliegenden technischen Gebiet erkennbar ist. Spezielle technische Elemente einer Ausführung können für technische Elemente in anderen Ausführungen kombiniert oder durch diese ersetzt werden.

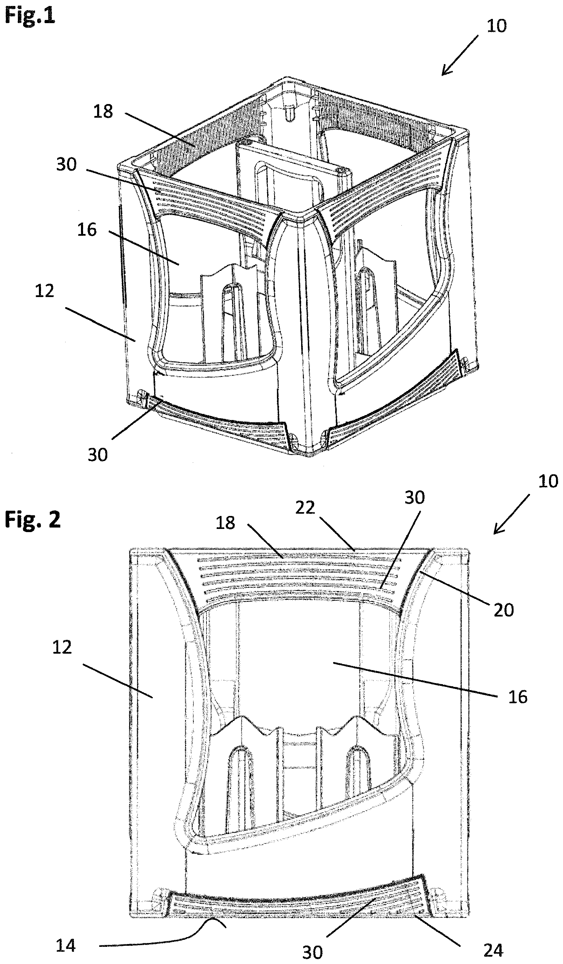

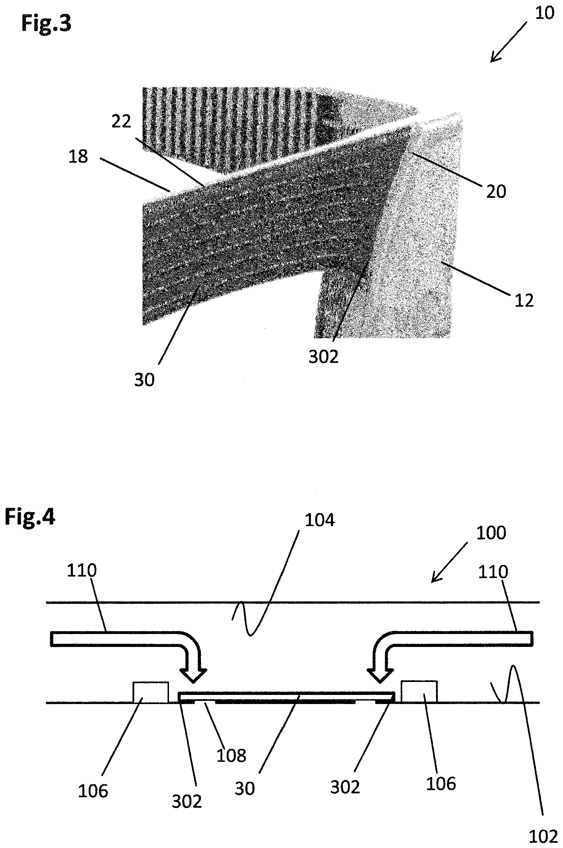

Figur 1 zeigt in einer schematischen perspektivischen Ansicht einen Transportbehälter 10 in Form eines Getränkeflaschenkastens 10. Der dargestellte Flaschenkasten ist zur Aufnahme von 10 Getränkeflaschen geeignet und weist einen zentralen Handgriff auf. Wie es ebenfalls Figur 2 zu entnehmen ist weist der Transportbehälter 10 in der dargestellten Ausführung vier Seitenwände 12 und einen Boden bzw. eine Bodenfläche 14 auf. In jeder der Seitenwände 12 sind großflächige Öffnungen 16 vorgesehen, und in jeder Seitenwand 12 sind in einem jeweiligen oberen Bereich Griffe 18 in Griffbereichen der Seitenwände 12 ausgebildet, die bis zu Oberseite des Transportbehälters 10 reichen. Wie es unter anderem Figuren 2 und 3 weiter zu entnehmen ist, sind zu beiden Seiten der Griffflächen der Griffe 18 Nuten 20 bzw. Vertiefungen im Transportbehälter 10 in Form eines Rechtecks, eines Halbkreises oder eines Ausschnitts eines Ovals in den Seitenwänden 12 des Transportbehälters 10 ausgebildet, die den jeweiligen Griff 18 seitlich begrenzen, während eine obere Kante 22 die Grifffläche nach oben hin begrenzt. Die Grifffläche jeder Seitenwand 12 hebt sich beispielsweise farblich von dem Rest des Kastenkörpers ab, indem eine Inmould-Folie 30 in die Grifffläche eingegossen ist. Die jeweilige Seitenwand 12 weist angrenzend an eine seitliche Außenkante der Inmould-Folie 30 eine Nute 20 auf. Die seitliche Kante 302 der Inmould-Folie 30 erstreckt sich dabei in einen gekrümmten Teil der Seitenwand 12 hinein, der eine Krümmung in Richtung zu der Innenseite des Transportbehälters 10 hin, also zu dem Kasteninnenraum hinragend aufweist, wie es in Figur 3 dargestellt ist.

Der Kasten weist zudem an seiner unteren Seite eine untere Kante 24 auf, an der ebenfalls, ähnlich wie im Griffbereich, ein Unterkantenbereich jeder Seitenwand 12 sich beispielsweise farblich von dem Rest des Kastenkörpers abhebt, indem eine weitere Inmould-Folie 30 in diesen Unterkantenbereich eingegossen ist. Die jeweilige Seitenwand 12 weist dabei wiederum angrenzend an eine seitliche Außenkante der weiteren Inmould-Folie 30 eine entsprechende Nute auf. Die seitliche Kante der weiteren Inmould-Folie 30 erstreckt sich dabei ebenfalls in einen gekrümmten Teil der Seitenwand 12 hinein, der eine Krümmung in Richtung zu der Innenseite des Transportbehälters 10 hin, also zu dem Kasteninnenraum hin aufweist.

Um nun einen entsprechenden hochqualitativen Übergang von Inmould-Folienrand zu Kastenkorpus zu erzielen wird der Transportbehälter 10 durch das erfindungsgemäße Verfahren hergestellt, siehe Figur 4, indem die jeweilige Inmould-Folie 30 in ein entsprechendes Spritzgusswerkzeug 100 zwischen dessen Außenwand 102 und dessen Innenwand 104 eingelegt und mittels einer oder mehrerer Vakuum-Nuten 108 zwischen diesen gehalten wird. Die Inmould-Folie 30 also mittels Unterdruck zu fixieren, wobei jede Vakuum-Nut 108 einen gewissen Abstand von einer an einer Innenseite des Spritzgusswerkzeugs 10 angeordneten Erhebung 106 zeigt und parallel zu der Erhebung 106 verläuft. Entsprechend zeigt auch die durch die Vakuum-Nut 108 gehaltene Inmould-Folie 30 bzw. deren Rand 302 einen entsprechenden Abstand zu der Erhebung 106.

Nach dem Einlegen der Inmould-Folie 30 erfolgt das Einspritzen des geschmolzenen Kunststoffmaterials in das Spritzgusswerkzeug 10, dessen Materialfluss 110 in Figur 4 mit Pfeilen dargestellt ist. Dadurch kann erkannt werden, dass die Erhebung 106 in dem Spritzgusswerkzeug 10 vorrangig quer zur Flussrichtung des Materialflusses 110 angeordnet ist, um eine Änderung der Richtung des Materialflusses 110 zur Bildung des Korpus des Transportbehälters 10 herbeizuführen. Der Materialfluss 110 wird somit nicht geradeaus frontal gegen den Schnittrand 302 der Inmould-Folie 30 gedrückt, sondern um den Rand 302 herum an die Rückseite bzw. an die freie, nicht von der Vakuum-Nut 108 gehaltene Innenseite der Inmould-Folie 30 geleitet, so dass die Inmould-Folie 30 durch den Materialfluss 110 des geschmolzenen Kunststoffmaterial gegen die Werkzeugaußenwand 102 gedrückt wird. Die durch die erzeugte Umlenkung herbeigeführte Richtungsänderung des Materialflusses 110 führt dazu, dass ein Winkel zwischen der Richtung des Materialflusses 110 und dem Rand 302 der Inmould-Folie 30 erzielt wird, der bei der in Figur 4 in etwa 45° beträgt. Entsprechend trifft das Spritzgussmaterial eben nicht parallel zur Außenwand 102 des Werkzeugs 100 auf den Rand 302 an der Kante der Inmould-Folie 30. Diese besondere Materialflusslenkung führt zum einen dazu, dass die Inmould-Folie 30 an Ort und Stelle gehalten wird, zusätzlich zu der durch die Vakuum-Nut 108 ausgeübte Fixierung, sondern führt ferner auch zu Verwirbelungen im Bereich des Rands 302 der Inmould-Folie 30, wodurch eine stärkere Verbindung zwischen dem Material der Inmould-Folie 30 und dem Kunststoffmaterial erfolgt. Schließlich kann das Spritzgusswerkzeug 100 nach einem formstabilen Abkühlen des Kunststoffmaterials geöffnet und der fertig gespritzte Transportbehälter 10 entnommen werden.

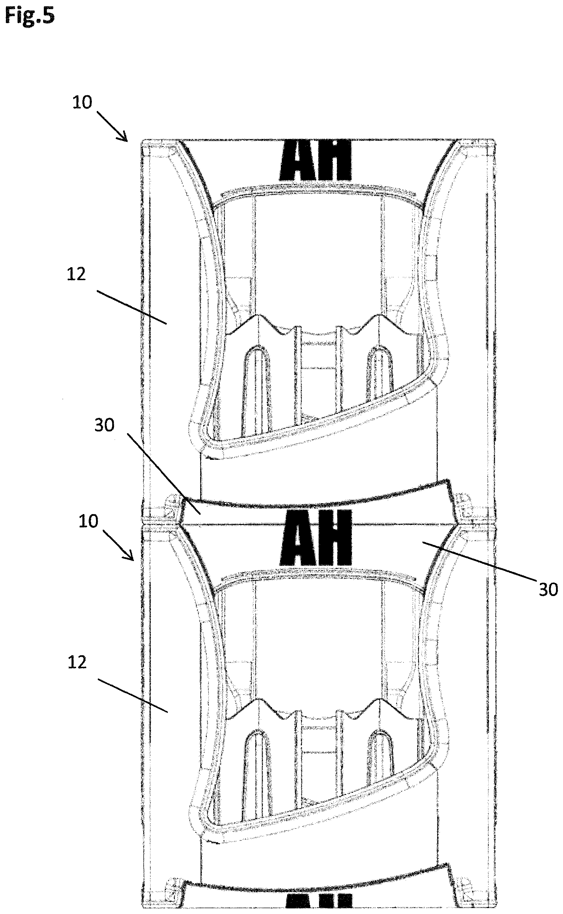

Wie es Figur 5 entnommen werden kann ist der durch das erfindungsgemäße Verfahren erzeugte Transportbehälter 10 so ausgebildet, dass nicht nur in einem Bereich der Griffe 18 "nahtlose" Inmould-Folien 30 eingebracht sind, sondern ebenfalls in einem Unterkantenbereich, so dass bei einem Übereinanderstapeln mehrerer solcher Transportbehälter 10 eine oder mehrere Inmould-Folien 30 so an eine obere Kante 22 und eine untere Kante 24 einer bzw. jeder Seitenwand 12 des Transportbehälter 10 angrenzen. Dadurch ergibt sich bei dem Stapel an Transportbehältern 10 ein optisch nahtloser Übergang zwischen den Inmould-Folien 30 der übereinander gestapelten Transportbehältern 10, es wird also ein Anschein eines direkten Übergangs eines Teils eines entsprechend positionierten Logos auf der jeweiligen Inmould-Folie 30 in einen entsprechenden ergänzenden Teil der jeweiligen Inmould-Folie 30 eines benachbarten gestapelten Transportbehälters 10 erzeugt, so dass der Eindruck eines vollständigen Logos, in Figur 4 durch die Buchstaben "AH" auf entsprechendem Untergrund dargestellt, entsteht, aufgebaut aus zwei Logo-Teilbereichen.

Vorhergehend wurde eine bevorzugte Ausführungsform der vorliegenden Erfindung beschrieben, wobei aber die vorliegende Erfindung nicht auf die zuvor beschriebene bevorzugte Ausführungsform beschränkt ist. Diverse Modifikationen in der Ausgestaltung können vorgenommen werden, ohne von der Erfindung abzuweichen, wie sie im Umfang der nachfolgenden Ansprüche angegeben ist.

## Patentansprüche

1. Verfahren zur Herstellung eines Transportbehälters (10), insbesondere eines Flaschenkastens, umfassend die folgenden Schritte:
Bereitstellen eines Spritzgusswerkzeugs (100),
optionale Vortemperierung mindestens einer einzulegenden Inmould-Folie (30);
Einlegen der mindestens einen Inmould-Folie (30) in das Spritzgusswerkzeug (100), so dass die mindestens eine Inmould-Folie (30) an einer Wandung (102) des geöffneten Spritzgusswerkzeugs (100) anliegt,
Schließen des Spritzgusswerkzeugs (100),
Einspritzen eines geschmolzenen Kunststoffmaterials in das Spritzgusswerkzeug (100), und
Öffnen des Spritzgusswerkzeugs (100) und Entnehmen des Transportbehälters (10) nach formstabiler Abkühlung des Kunststoffmaterials,
**dadurch gekennzeichnet, dass** das Spritzgusswerkzeug (100) derart ausgestaltet ist, dass dieses angrenzend an Bereiche des Spritzgusswerkzeugs (100), welche eine Krümmung aufweisen, die in Richtung der Innenseite des zu bildenden Transportbehälters (10) weist und in der sich eine Kante (302) der mindestens einen Inmould-Folie (30) befindet, jeweils eine Erhebung (106) aufweist, die eingerichtet ist, einen Materialfluss (112) des geschmolzenen Kunststoffmaterials in dem geschlossenen Spritzgusswerkzeug (100) so umzulenken, dass das geschmolzene Kunststoffmaterial so auf einen an die Kante (302) der mindestens einen Inmould-Folie (30) angrenzenden Randbereich der mindestens einen Inmould-Folie (30) trifft, dass das geschmolzene Kunststoffmaterial den Randbereich der mindestens einen Inmould-Folie (30) gegen die Wandung (102) des Spritzgusswerkzeugs (100) drückt.

2. Verfahren nach Anspruch 1, **dadurch gekennzeichnet, dass** der geschmolzene Kunststoff mit einer Temperatur in das Spritzgusswerkzeug (100) eingespritzt wird, die so gewählt ist, dass das geschmolzene Kunststoffmaterial bei Erreichen der mindestens einen Inmould-Folie (30) noch eine Temperatur oberhalb der Schmelztemperatur der Inmould-Folie (30) aufweist, und die Temperatur geringer ist als eine Zersetzungstemperatur des Kunststoffmaterials.

3. Verfahren nach Anspruch 1 oder 2, **dadurch gekennzeichnet, dass** die Erhebung (106) eine Höhe im Bereich von 0,01 mm bis 3 mm aufweist, und/oder dass die Erhebung (106) eine längliche Form aufweist.

4. Verfahren nach einem der vorangehenden Ansprüche, **dadurch gekennzeichnet, dass** die Erhebung (106) parallel zu der Kante (302) der Inmould-Folie (30) verläuft.

5. Verfahren nach einem der vorangehenden Ansprüche, **dadurch gekennzeichnet, dass** die Erhebung (106) einen Querschnitt in Form eines Rechtecks, eines Halbkreises oder eines Ausschnitts eines Ovals aufweist, wobei eine Breite der Erhebung (106) vorzugsweise im Bereich von 0,1 mm bis 3 mm liegt.

6. Verfahren nach einem der vorangehenden Ansprüche, **dadurch gekennzeichnet, dass** ein Abstand zwischen der Erhebung (106) und der Kante (302) der mindestens einen Inmould-Folie (30) im Bereich von 0 bis 5 mm beträgt, bevorzugt von 1 mm bis 3 mm.

7. Verfahren nach einem der vorangehenden Ansprüche, **dadurch gekennzeichnet, dass** das Spritzgusswerkzeug (100) eingerichtet ist, die mindestens eine Inmould-Folie (30) mittels Unterdruck zu fixieren, wobei hierzu das Spritzgusswerkzeug (100) mit mindestens einem Haltemittel in Form einer Vakuum-Öffnung und/oder mindestens einer Vakuum-Nut (108) versehen ist.

8. Verfahren nach Anspruch 7, **dadurch gekennzeichnet, dass** die mindestens eine Vakuum-Nut (108) von der Erhebung (106) zum Umlenken des Materialflusses (110) einen Abstand im Bereich von 1 mm bis 5 mm aufweist und parallel zu der mindestens einen Erhebung (106) verläuft.

9. Verfahren nach einem der vorangehenden Ansprüche, **dadurch gekennzeichnet, dass** die Wandung (102), an der die mindestens eine Inmould-Folie (30) anliegt, eine in das Innere gerichtete Wandung (102) des Spritzgusswerkzeugs (100) ist.

10. Verfahren nach einem der vorangehenden Ansprüche, **dadurch gekennzeichnet, dass** die mindestens eine Inmould-Folie (30) eine bedruckte Kunststofffolie ist.

11. Verfahren nach Anspruch 10, **dadurch gekennzeichnet, dass** die Kunststofffolie eine Dicke im Bereich von 50 µm bis 250 µm aufweist.

12. Verfahren nach einem der vorangehenden Ansprüche, **dadurch gekennzeichnet, dass** das geschmolzene Kunststoffmaterial ausgewählt ist aus der Gruppe bestehend aus Polyethylen hoher Dichte, HDPE, und Polypropylen, PP, oder einer Kombination aus diesen, und/oder dass das Material der Inmould-Folie ausgewählt ist aus der Gruppe bestehend aus Polyethylenfolie, PE-Folie, Polypropylenfolie, PP-Folie, oder Polyethylentherephthalatfolie, PET-Folie, oder aus einer Kombination aus diesen.

13. Spritzgusswerkzeug (100) zur Verwendung in einem Verfahren nach einem der Ansprüche 1 bis 12, **dadurch gekennzeichnet, dass** das Spritzgusswerkzeug (100) mindestens eine Vakuum Nut (108) aufweist, welche von einer Erhebung (106) zum Umlenken eines Materialflusses (110) einen Abstand im Bereich von 1 mm bis 7 mm aufweist.

14. Spritzgegossener Transportbehälter (10) aus einem Kunststoffmaterial, insbesondere ein spritzgegossener Flaschenkasten, umfassend einen Boden (14) und Seitenwände (12), wobei in mindestens zweien der Seitenwände (12) Öffnungen (16) angeordnet und Griffe (18) ausgebildet sind und wobei zumindest ein Teil mindestens einer der Seitenwände (12) auf einer Außenseite mit mindestens einer Inmould-Folie (30) versehen ist, **dadurch gekennzeichnet, dass** die Seitenwand (12) angrenzend an eine Kante (302) der mindestens einen Inmould-Folie (30) eine Nute (20) aufweist und sich die Kante (302) der mindestens einen Inmould-Folie (30) in einen gekrümmten Teil der Seitenwand (12) hinein erstreckt, welcher eine Krümmung in Richtung der Innenseite des Transportbehälters (10) aufweist.

15. Transportbehälter (10) nach Anspruch 14, **dadurch gekennzeichnet, dass** der Transportbehälter (10) derart ausgestaltet ist, dass eine Vielzahl an Transportbehälter (10) übereinander stapelbar sind und dass die mindestens eine Inmould-Folie (30) derart angeordnet ist, dass eine oder mehrere Inmould-Folien (30) so an eine obere Kante (22) und eine untere Kante (24) der Seitenwand (12) des Transportbehälter (10) angrenzen, dass bei einem Stapeln der Transportbehälter (10) ein optisch nahtloser Übergang zwischen den Inmould-Folien (30) der übereinander gestapelten Transportbehältern (10) vorliegt.

## Claims

1. A method of manufacturing a transport container (10), in particular a bottle crate, comprising the following steps:
providing an injection moulding tool (100),
optionally pre-tempering of at least one inmould film (30) to be inserted;
inserting the at least one inmould film (30) into the injection mould (100), so that the at least one inmould film (30) abuts against a wall (102) of the opened injection mould (100),
closing the injection mould (100),
injecting a molten plastic material into the injection moulding tool (100), and
opening the injection moulding tool (100) and removing the transport container (10) after the plastic material has cooled down to a stable shape,
**characterised in that** the injection moulding tool (100) is configured such that, adjacent to regions of the injection moulding tool (100) which have a curvature which points in the direction of the inside of the transport container (10) to be formed and in which an edge (302) of the at least one inmould film (30) is located, the injection moulding tool (100) has a respective projection (106) which is configured to redirect a material flow (112) of the molten plastic material within the closed injection moulding tool (100) in such a way that the molten plastic material meets an edge region of the at least one inmould film (30) adjacent to the edge (302) of the at least one inmould film (30) in such a way that the molten plastic material presses the edge region of the at least one inmould film (30) against the wall (102) of the injection moulding tool (100).

2. The method according to claim 1, **characterised in that** the molten plastic is injected into the injection moulding tool (100) at a temperature which is selected such that the molten plastic material still has a temperature above the melting temperature of the inmould film (30) when it reaches the at least one inmould film (30), and the temperature is lower than a decomposition temperature of the plastic material.

3. The method according to claim 1 or 2, **characterised in that** the projection (106) has a height in the range from 0.01 mm to 3 mm, and/or **in that** the projection (106) has an elongate shape.

4. The method according to any one of the preceding claims, **characterised in that** the projection (106) extends parallel to the edge (302) of the inmould film (30).

5. The method according to any one of the preceding claims, **characterised in that** the projection (106) has a cross-section in the form of a rectangle, a semicircle or a section of an oval, wherein a width of the projection (106) is preferably in the range from 0.1 mm to 3 mm.

6. The method according to any one of the preceding claims, **characterised in that** a distance between the projection (106) and the edge (302) of the at least one inmould film (30) is in the range from 0 to 5 mm, preferably from 1 mm to 3 mm.

7. The method according to any one of the preceding claims, **characterised in that** the injection moulding tool (100) is set up to fixate the at least one inmould film (30) by means of negative pressure, the injection moulding tool (100) being provided for this purpose with at least one holding means in the form of a vacuum opening and/or at least one vacuum groove (108).

8. The method according to claim 7, **characterised in that** the at least one vacuum groove (108) has a distance in the range from 1 mm to 5 mm from the projection (106) for deflecting the material flow (110) and extends parallel to the at least one projection (106).

9. The method according to any one of the preceding claims, **characterised in that** the wall (102) against which the at least one inmould film (30) abuts is a wall (102) of the injection mould (100) directed towards the interior.

10. The method according to any one of the preceding claims, **characterised in that** the at least one inmould film (30) is a printed plastic film.

11. The method according to claim 10, **characterised in that** the plastic film has a thickness in the range from 50 µm to 250 µm.

12. The method according to any one of the preceding claims, **characterised in that** the molten plastic material is selected from the group consisting of high-density polyethylene, HDPE, and polypropylene, PP, or a combination thereof, and/or **in that** the material of the inmould film is selected from the group consisting of polyethylene film, PE film, polypropylene film, PP film, or polyethylene terephthalate film, PET film, or a combination thereof.

13. An injection moulding tool (100) for use in a method according to any one of claims 1 to 12, **characterised in that** the injection moulding tool (100) has at least one vacuum groove (108) which is spaced from an projection (106) for deflecting a material flow (110) by a distance in the range from 1 mm to 7 mm.

14. An injection-moulded transport container (10) made of a plastic material, in particular an injection-moulded bottle crate, comprising a base (14) and side walls (12), wherein openings (16) are arranged in at least two of the side walls (12) and handles (18) are formed, and wherein at least a part of at least one of the side walls (12) is provided on an outer side with at least one inmould film (30), **characterised in that** the side wall (12) has a groove (20) adjacent to an edge (302) of the at least one inmould film (30), and the edge (302) of the at least one inmould film (30) extends into a curved part of the side wall (12), which has a curvature in the direction of the inside of the transport container (10).

15. The transport container (10) according to claim 14, **characterised in that** the transport container (10) is designed in such a way that a plurality of transport containers (10) can be stacked on top of one another, and **in that** the at least one inmould film (30) is arranged in such a way, that one or more inmould films (30) are adjacent to an upper edge (22) and a lower edge (24) of the side wall (12) of the transport container (10) in such a way that, when the transport containers (10) are stacked, an optically seamless transition exists between the inmould films (30) of the transport containers (10) stacked on top of one another.

## Revendications

1. Procédé de fabrication d'un récipient de transport (10), plus particulièrement d'un caisson de bouteilles, comprenant les étapes suivantes :
mise à disposition d'un outil d'injection (100),
pré-régulation de la température optionnelle d'au moins un film de surmoulage (30) à insérer ;
insertion de l'au moins un film de surmoulage (30) dans l'outil d'injection (100), de sorte que l'au moins un film de surmoulage (30) s'appuie contre une paroi (102) de l'outil d'injection (100) ouvert,
fermeture de l'outil d'injection (100),
injection de la matière plastique fondue dans l'outil d'injection (100) et
ouverture de l'outil d'injection (100) et retrait du récipient de transport (10) après refroidissement sans déformation de la matière plastique,
**caractérisé en ce que** l'outil d'injection (100) est conçu de sorte que celui-ci comprend, près des parties de l'outil d'injection (100) qui présentent une courbure qui est orientée en direction de l'intérieur du récipient de transport (10) à former et dans laquelle se trouve une arête (302) de l'au moins un film de surmoulage (30) respectivement un bossage (106) qui est conçu pour dévier un flux de matériau (112) de la matière plastique fondue dans l'outil d'injection (100) fermé de sorte que la matière plastique fondue rencontre une partie de bord de l'au moins un film de surmoulage (30) adjacente à l'arête (302) de l'au moins un film de surmoulage (30), de façon à ce que la matière plastique fondue comprime la partie de bord de l'au moins un film de surmoulage (30) contre la paroi (102) de l'outil d'injection (100).

2. Procédé selon la revendication 1, **caractérisé en ce que** la matière plastique fondue est injectée dans l'outil d'injection (100) avec une température qui est choisie de sorte que la matière plastique fondue présente encore, lorsqu'elle atteint l'au moins un film de surmoulage (30), une température supérieure à la température de fusion du film de surmoulage (30) et de sorte que la température est inférieure à la température de décomposition de la matière plastique.

3. Procédé selon la revendication 1 ou 2, **caractérisé en ce que** le bossage (106) présente une hauteur de l'ordre de 0,01 mm à 3 mm ; et/ou **en ce que** le bossage (106) présente une forme allongée.

4. Procédé selon l'une des revendications précédentes, **caractérisé en ce que** le bossage (106) s'étend parallèlement à l'arête (302) du film de surmoulage (30).

5. Procédé selon l'une des revendications précédentes, **caractérisé en ce que** le bossage (106) présente, en section transversale, la forme d'un rectangle, d'un demi-cercle ou d'une découpe d'un ovale, dans lequel la largeur du bossage (106) est de préférence de l'ordre de 0,1 mm à 3 mm.

6. Procédé selon l'une des revendications précédentes, **caractérisé en ce qu'**une distance entre le bossage (106) et l'arête (302) de l'au moins un film de surmoulage (30) est de l'ordre de 0 à 5 mm, de préférence de 1 mm à 3 mm.

7. Procédé selon l'une des revendications précédentes, **caractérisé en ce que** l'outil d'injection (100) est conçu pour fixer l'au moins un film de surmoulage (30) à l'aide d'une dépression, dans lequel, pour cela, l'outil d'injection (100) est muni d'au moins un moyen de maintien sous la forme d'une ouverture à vide et/ou d'au moins une rainure à vide (108).

8. Procédé selon la revendication 7, **caractérisé en ce que** l'au moins une rainure à vide (108) présente, par rapport au bossage (106) pour la déviation du flux de matériau (110), une distance de l'ordre de 1 mm à 5 mm et s'étend parallèlement à l'au moins un bossage (106).

9. Procédé selon l'une des revendications précédentes, **caractérisé en ce que** la paroi (102), contre laquelle s'appuie l'au moins un film de surmoulage (30), est une paroi (102), orientée vers l'intérieur, de l'outil d'injection (100).

10. Procédé selon l'une des revendications précédentes, **caractérisé en ce que** l'au moins un film de surmoulage (30) est un film de matière plastique imprimé.

11. Procédé selon la revendication 10, **caractérisé en ce que** le film de matière plastique présente une épaisseur de l'ordre de 50 µm à 250 µm.

12. Procédé selon l'une des revendications précédentes, **caractérisé en ce que** la matière plastique fondue est sélectionnée dans le groupe constitué du polyéthylène haute densité, HDPE et du polypropylène, PP, ou d'une combinaison de ceux-ci et/ou **en ce que** le film de surmoulage est sélectionné dans le groupe constitué d'un film de polyéthylène, film PE, un film de polypropylène, film PP, ou un film de poléthylène-téréphthalate, film PET ou d'une combinaison de ceux-ci.

13. Outil d'injection (100) destiné à être utilisé dans un procédé selon l'une des revendications 1 à 12, **caractérisé en ce que** l'outil d'injection (100) comprend au moins une rainure à vide (108) qui présente, par rapport au bossage (106) pour la déviation d'un flux de matériau (110), une distance de l'ordre de 1 mm à 7 mm et s'étend parallèlement à l'au moins un bossage (106).

14. Récipient de transport moulé par injection (10) constitué d'une matière plast, plus particulièrement, un caisson à bouteilles moulé par injection, comprenant un fond (14) et des parois latérales (12), dans lequel, dans au moins deux des parois latérales (12), sont disposées des ouvertures (16) et des poignées (18) sont formées et dans lequel au moins une partie d'au moins une des parois latérales (12) est munie, sur une face externe, d'au moins un film de surmoulage (30), **caractérisé en ce que** la paroi latérale (12) présente, près d'une arête (302) de l'au moins un film de surmoulage (30), une rainure (20) et l'arête (302) de l'au moins un film de surmoulage (30) s'étend dans une partie incurvée de la paroi latérale (12), qui présente une courbure en direction de l'intérieur du récipient de transport (10).

15. Récipient de transport (10) selon la revendication 14, **caractérisé en ce que** le récipient de transport (10) est conçu de sorte qu'une pluralité de récipients de transport (10) peuvent être empilés les uns sur les autres et **en ce que** l'au moins un film de surmoulage (30) est disposé de sorte qu'un ou plusieurs films de surmoulage (30) sont adjacents à une arête supérieure (22) et une arête inférieure (24) de la paroi latérale (12), de sorte que, lors d'un empilage des récipients de transport (10), on obtient une transition parfaite et invisible entre les films de surmoulage (30) des récipients de transport (10) empilés les uns sur les autres.
